# EUROPEAN PATENT APPLICATION

(11) **EP 3 494 784 A1**
(43) Date of publication of application: **12.06.2019**
(21) Application number: 17836180.4
(22) Date of filing: 12.04.2017
(51) Int. Cl.: A01K 27/00

(54) **PET LEASH DEVICE**

(30) Priority: 03.08.2016 CN 201610631244
(71) Applicant: Dongguan Jiasheng Enterprise Co., Ltd., Dongguan, Guangdong 523127 (CN)
(72) Inventor: CHEN, Silong, Dongguan Guangdong 523127 (CN)
(74) Representative: Cabinet Chaillot
(86) International application number: PCT/CN2017/080201
(87) International publication number: WO 2018/023996

(57) **Abstract**

A pet leash device, having a casing (10), a winding wheel (20), and a leash cord (30), and further having a locking mechanism. The locking mechanism includes a button (401), a manipulation member (402), a first spring (403), and a pawl member (404). The manipulation member (402) includes a transverse portion (4021) and a longitudinal portion (4022) which are connected in sequence. The lower portion of the button (401) is hinged to the transverse portion (4021), and the longitudinal portion (4022) is hinged to one end of the pawl member (404). The first spring (403) is located between the transverse portion (4021) and the wheel locking portion (4041) of the pawl member (404). The winding wheel (20) has troughs (201) for the pawl member (404) to engage with when the button (401) is pressed. Inside the winding wheel (20), there is further provided a rotary spring for rotating the winding wheel (20) to retract the leash cord (30). After the button (401) is pressed, the pawl member (404) fits into one of the troughs on the winding wheel (20), such that the winding wheel (20) cannot rotate anti-clockwise, meanwhile the rotary spring inside the winding wheel (20) recoils to rotate the winding wheel (20) clockwise, i.e., to retract the leash cord (30). When the button (401) is released, the button automatically resets, i.e., returns to a free state, and at the same time the leash cord (30) can be pulled out.

## Description

### BACKGROUND OF THE INVENTION

The present disclosure relates to the field of pet leash device, and more specifically relates to a pet leash device.

### BACKGROUND ART

Following the improvement of living standard with respect to mental and spiritual aspects, pet has become an important companion of human beings. It can be seen a greater variety of commodities for pets in the market, and a pet leash has become a fashionable pet commodity. The component in a pet leash that controls activation of a cord winding wheel is a critical component of the pet leash, and this component directly affects the utility and general appearance of the pet leash. Pet leashes now available in the market have defects with respect to their utility, appearance and production costs. For example, too many buttons on the pet leash may cause unclear functional indications of the buttons, complicated operation procedures, defective utility, bad appearance, complicated assembly, low production efficiency and high production cost etc.

Therefore, the prior art requires improvements and modifications.

### BRIEF SUMMARY OF THE INVENTION

In view of the disadvantages of the prior art, the present invention provides a pet leash device which can release and retract the leash cord conveniently.

To achieve the above object, the present invention provides the following technical solutions:
A pet leash device, comprising a casing, a winding wheel and a leash cord; a cord outlet hole is provided on the casing; the winding wheel is provided inside the casing; the leash cord winds around the winding wheel; the leash cord is released out of the casing through the cord outlet hole; the pet leash device also comprises a locking mechanism; the locking mechanism comprises a button, a manipulation member, a first spring and a pawl member; the manipulation member comprises a transverse portion and a longitudinal portion connected sequentially; a bottom part of the button is hinged with the transverse portion; the longitudinal portion and one end of the pawl member are hinged together; the first spring is positioned between the transverse portion and a wheel locking portion of the pawl member; the winding wheel is provided with troughs between gear teeth of the winding wheel; each trough is capable to be fitted in with the pawl member when the button is pressed down; a rotary spring for rotating the winding wheel so as to retract the leash cord is provided inside the winding wheel.

In the pet leash device, a platform is provided in a middle lower portion of the button; a protruded portion corresponding to the platform for locking purpose is provided in the casing.

In the pet leash device, an installation hole for installing the button is provided on the casing; the installation hole has a diameter larger than a diameter of the button.

In the pet leash device, the longitudinal portion is sleeved with a second spring; the second spring is positioned between the pawl member and the transverse portion.

In the pet leash device, the locking mechanism also comprises a manipulation rod; the first spring sleeves the manipulation rod; one end of the manipulation rod is connected with the transverse portion; another end of the manipulation rod is connected with the pawl member.

In the pet leash device, the winding wheel sleeves on a central axis provided inside the casing.

In the pet leash device, one side of the casing comprises an integrally formed handle.

In the pet leash device, the handle is ergonomically provided with a curved portion that fits a shape of a hand.

In the pet leash device, a hinging hole that provides hinging of the longitudinal portion and the pawl member is an elliptical hole.

In the pet leash device, the casing is also provided with a soft plastic member; the soft plastic member covers an inner side wall of the installation hole.

Compared with the prior art, the present invention provides a pet leash device, comprising a casing, a winding wheel and a leash cord, and further comprising a locking mechanism. The locking mechanism comprises a button, a manipulation member, a first spring, and a pawl member; the manipulation member comprises a transverse portion and a longitudinal portion connected sequentially. When the button is pressed down, the pawl member can be fitted into one of the troughs provided between gear teeth of the winding wheel such that the winding wheel cannot rotate anti-clockwise, and accordingly, the leash cord cannot be released, and in the meantime, a rotary spring provided inside the winding wheel recoils so that the winding wheel rotates clockwise to retract the leash cord. When the button is released, the button resets to its initial position in order that the present invention resumes a free state, and accordingly, the leash cord can again be released. The present invention has a novel structure, and is convenient to use and assemble, and is also simple to operate. The present invention significantly facilitates convenient use of the same by a user.

### BRIEF DESCRIPTION OF THE DRAWINGS

FIG. 1 is a schematic diagram showing the pet leash device of the present invention in a free state.
FIG. 2 is an enlarged view of portion A indicated in FIG. 1.
FIG. 3 is a schematic diagram of the pet leash device of the present invention when the pawl member is fitted into a trough when the button is pressed down.
FIG. 4 is an enlarged view of portion B indicated in FIG. 3.
FIG. 5 is a schematic diagram of the pet leash device of the present invention when the leash cord is retracted.
FIG. 6 is an enlarged view of portion C indicated in FIG. 5.
FIG. 7 is a schematic diagram of the pet leash device of the present invention when the button is pressed down and then slided forward.
FIG. 8 is an enlarged view of portion D indicated in FIG. 7.
FIG. 9 is a schematic view of the manipulation member of the present invention.
FIG. 10 is a schematic view of the button of the present invention.

### DETAILED DESCRIPTION OF THE INVENTION

In view of the disadvantages of the prior art, the present invention provides a pet leash device which can release and retract the leash cord, and allow the released leash cord released by a certain length to be temporarily locked in place at the length it is released.

In order that the object, technical solution and technical effects of the present invention are illustrated more clearly and definitely, the present invention will be further described in detail below with reference to the drawings and an embodiment. It should be understood that the embodiment as herein described is only intended to explain but not to limit the present invention.

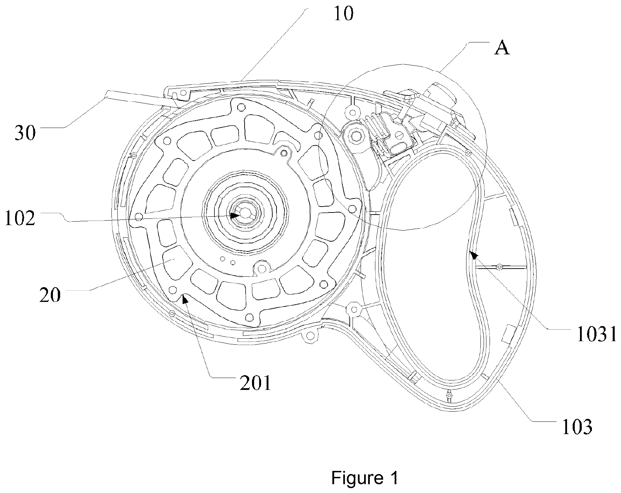

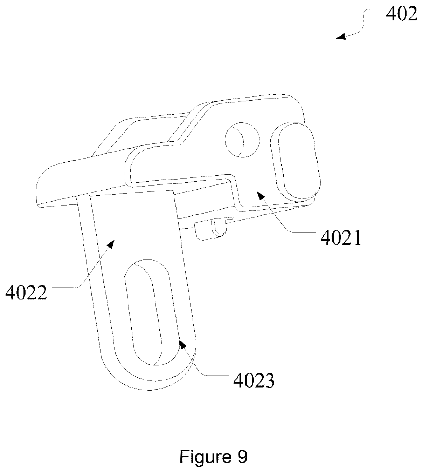

With reference to FIGs. 1, 2, and 9, the present invention provides a pet leash device, comprising a casing 10, a winding wheel 20 and a leash cord 30; a cord outlet hole (not designated in the figures) is provided on the casing 10; the winding wheel 20 is provided inside the casing 10; the leash cord 30 winds around the winding wheel 20; the leash cord 30 is released out of the casing 10 through the cord outlet hole; the pet leash device also comprises a locking mechanism (not designated in the figures); the locking mechanism comprises a button 401, a manipulation member 402, a first spring 403 and a pawl member 404; as shown in FIG. 9, the manipulation member 402 comprises a transverse portion 4021 and a longitudinal portion 4022 connected sequentially; a bottom part of the button 401 is hinged with the transverse portion 4021; the longitudinal portion 4022 and one end of the pawl member 404 are hinged together; the first spring 403 is positioned between the transverse portion 4021 and a wheel locking portion 4041 of the pawl member 404; the winding wheel 20 is provided with troughs 201 between gear teeth of the winding wheel 20; each trough is capable to be fitted in with the pawl member 404 when the button 401 is pressed down; a rotary spring (not shown in the figures) for rotating the winding wheel 20 so as to retract the leash cord 30 is provided inside the winding wheel 20.

In a free state, the leash cord 30 can be freely released; when the button 401 is pressed down, the pawl member 404 is fitted into one of the troughs 201 on the winding wheel 20 such that the winding wheel 20 cannot rotate anti-clockwise, and therefore the leash cord 30 cannot be released, and then the rotary spring inside the winding wheel 20 recoils such that the winding wheel 20 rotates clockwise to retract the leash cord 30; when the button 401 is released, the button 401 resets automatically and the pet leash device resumes a free state where the leash cord 30 can be released again. The present invention has a novel structure, and is convenient to use and assemble, and is also simple to operate. The present invention significantly facilitates convenient use of the same by a user.

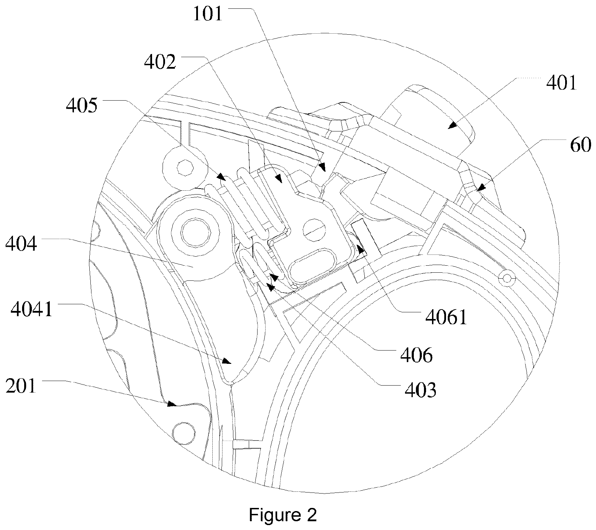

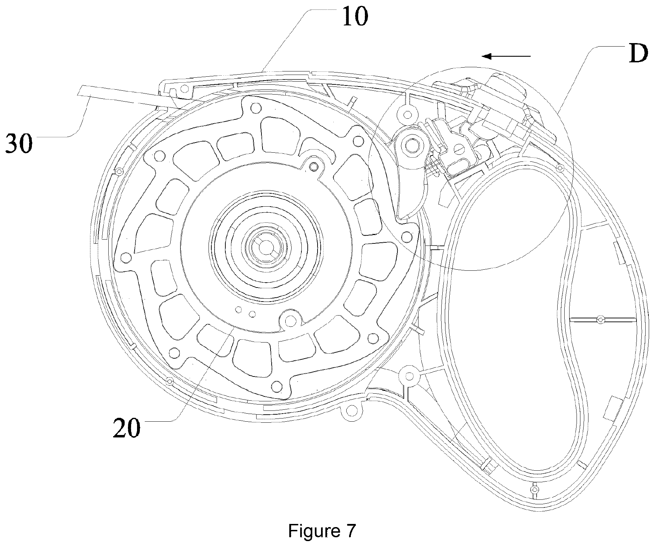

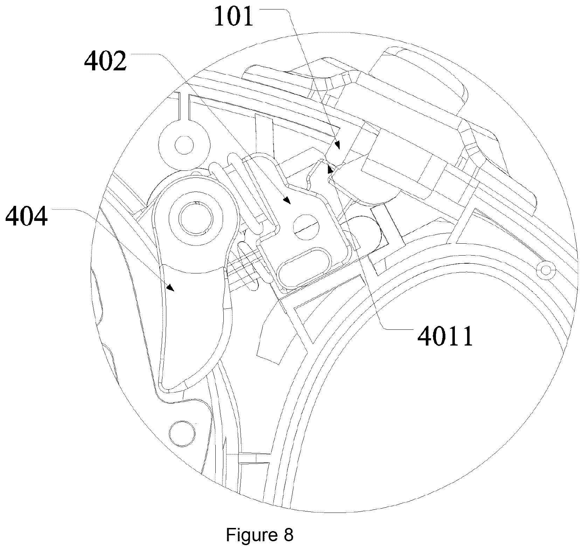

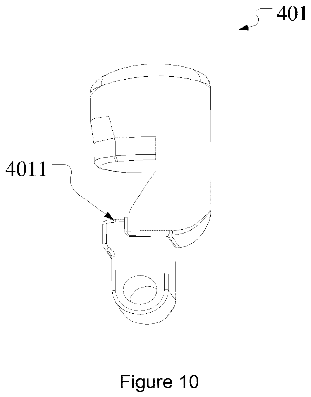

With reference to FIGs. 2 and 10, a platform 4011 is provided in a middle lower portion of the button 401; a protruded portion 101 corresponding to the platform 4011 for locking purpose is provided in the casing 10. As shown in FIGs. 7 and 8, during use of the present invention when the button is pressed down 401, a forward slide of the button 401 (in a direction indicated by the arrow shown in FIG. 1) will cause the platform 4011 of the button 401 to be fitted and locked with the protruded portion 101 of the casing 10, such that the leash cord 30 can be stopped from releasing (the pawl member 404 fitted into one of the troughs 201 of the winding wheel 20 to stop the winding wheel 20 from rotating). When it is necessary to remove the temporary stop of the leash cord 30, press down the button 401 and then slide the button 401 backward to reset the button 401, and the leash cord 30 can again be released.

Specifically, an installation hole (not shown in the figures) for installing the button 401 is provided on the casing 10. The installation hole has a diameter larger than a diameter of the button 401 to provide a space for the forward slide of the button 401.

As shown in FIGs. 1, 2, 7-10, the longitudinal portion 4022 is sleeved with a second spring 405; the second spring 405 is positioned between the pawl member 404 and the transverse portion 4021; when the button 401 is pressed down and then slided forward, the platform 4011 of the button 401 is locked beneath the protruded portion 101 of the casing 10, and simultaneously, the second spring 405 is compressed; when the button 401 is pressed down again and then slided backward, the platform 4011 of the button 401 disengages and slides away from the protruded portion 101 of the casing 10, and simultaneously, the second spring 405 resets the button 401 via its resilient force.

As shown in FIG. 9, for the purpose of more flexible operation, the longitudinal portion 4022 has an elliptical hole 4023 that allows the manipulation member 402 to move up and down.

More specifically, with reference to FIGs. 1, 2, 9 and 10, the locking mechanism also comprises a manipulation rod 406; the first spring 403 sleeves the manipulation rod 406; one end of the manipulation rod 406 is connected with the transverse portion 4021; another end of the manipulation rod 406 is connected with the pawl member 404 or abuts against the pawl member 404; a through hole (not shown in the figures) for the manipulation rod 406 to pass through is provided on the transverse portion 4021 such that the transverse portion 4021 can freely rotate when the button 401 is pressed down; the end of the manipulation rod 406 connected with the transverse portion 4021 is provided with a hook 4061 which hooks on the transverse portion 4021, such that when the first spring 403 is decompressed by its own resilient force, the manipulation rod 406 can be prevented from falling out of the through hole and the first spring 403 is prevented from falling off. When the button 401 is pressed down, the manipulation member 402 and the manipulation rod 406 together manipulate the pawl member 404 to rotate clockwise, so that the pawl member 404 fits into one of the troughs 201 of the winding wheel 20; when the button 401 is released, the resilience of the first spring 403 resets the pawl member 404.

Specifically, the winding wheel 20 sleeves on a central axis 102 provided inside the casing 10; the winding wheel 20 rotates clockwise or anti-clockwise about the central axis 102 being a center, so that the leash cord 30 can be released or retracted.

One side of the casing 10 comprises an integrally formed handle 103. Specifically, the handle 103 is ergonomically provided with curved portion 1031 that fits a shape of a hand. Preferably, the handle 103 is covered by a soft plastic cover (not shown in the figures). The integrally formed handle 103 and its curved portion 1031 provide comfortable use experience to users. The soft plastic cover covering the handle 103 greatly increases protection of the hand.

The casing 10 is also provided with soft plastic member 60; a tubular portion (not shown in the figures) of the soft plastic member 60 is inserted into the installation hole; an exposed portion of the soft plastic member 60 attaches tightly with the casing 10 for the purpose of protecting the button 401 and reducing frictions.

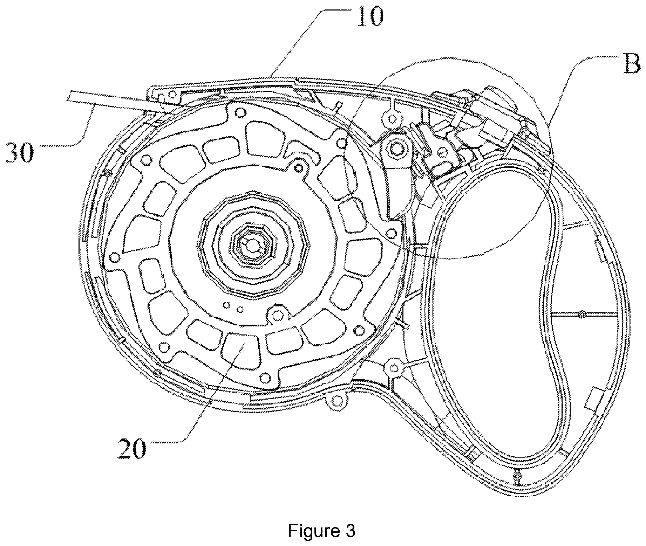

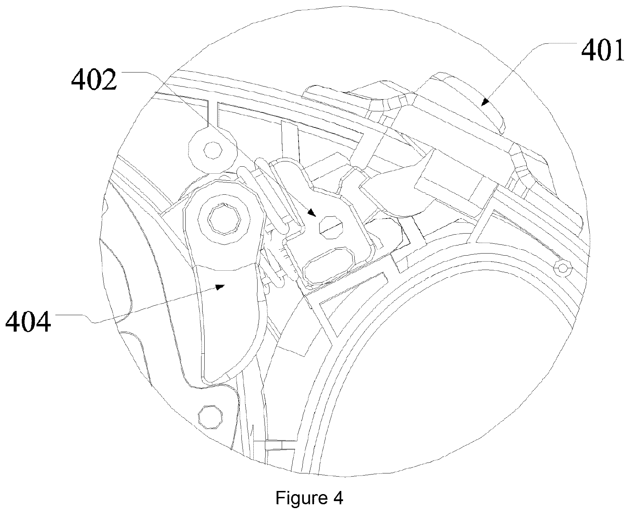

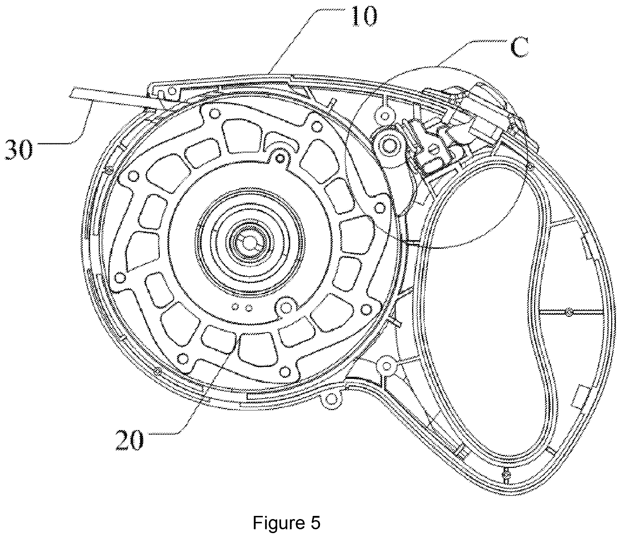

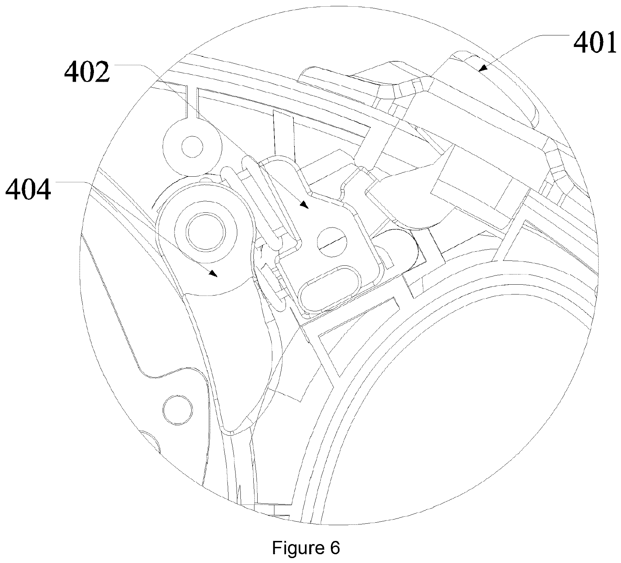

As shown in FIGs. 1-2, under a free state in actual use of the present invention, a pet can pull the leash cord 30 freely. As shown in FIGs 3-4, when the owner of the pet wishes to restrain the pet, the button 401 can be pressed down once such that the winding wheel 20 is being temporarily stopped to rotate. As shown in FIGs. 5-6, when the owner wishes to retract the leash cord 30, press down and hold the button 401, such that after the winding wheel 20 has stopped to rotate, the rotary spring inside the winding wheel recoils so that the winding wheel 20 rotates clockwise; as the winding wheel 20 rotates clockwise, the gear teeth of the winding wheel 20 between the troughs 201 can abut the pawl member 404 and return the pawl member 404 to its initial position, and the first spring 403 also returns to a compressed condition, as a result, the leash cord 30 can be retracted. As shown in FIGs. 7-8, when the owner wishes to locked the released leash cord 30 at the length it is released, press and then slide forward the button 401 such that the platform 4011 of the button 401 is locked beneath the protruded portion 101 of the casing to achieve temporary stop of the winding wheel 20, thereby locking the released leash cord 30 at the length it is released.

In summary, the present invention provides a pet leash device, comprising a casing 10, a winding wheel 20 and a leash cord 30, and further comprising a locking mechanism 40. The locking mechanism 40 comprises a button 401, a manipulation member 402, a first spring 403, and a pawl member 404; the manipulation member 402 comprises a transverse portion 4021 and a longitudinal portion 4022 connected sequentially. When the button 401 is pressed down, the pawl member 404 can be fitted into one of the troughs 201 provided between gear teeth of the winding wheel 20 such that the winding wheel 20 cannot rotate anti-clockwise, and in the meantime, a rotary spring provided inside the winding wheel 20 retracts so that the winding wheel 20 rotates clockwise to retract the leash cord 30. When the button 401 is pressed down and then slided forward, the pawl member 404 fits into one of the troughs 201 on the winding wheel 20, and a platform 4011 of the button 401 is locked beneath a protruded portion 101 of the casing 10 such that the button 401 cannot be released, and accordingly, the leash cord 30 likewise cannot be released or retracted. To cancel the temporary stop function, press down and then slide the button 401 backward so that the button 401 resets to its initial position in order that the present invention resumes a free state. The present invention has a novel structure, and is convenient to use and assemble, and is also simple to operate. The present invention significantly facilitates convenient use of the same by a user.

It should be understood that, any person skilled in this field of art may replace or amend the present invention with other solutions having equivalent technical effects based on the teachings of the technical solutions and inventive concepts of the present invention, and all replacements or amendments should also fall within the scope of protection of the claims of the present invention.

## Claims

1. A pet leash device, comprising a casing, a winding wheel and a leash cord; a cord outlet hole is provided on the casing; the winding wheel is provided inside the casing; the leash cord winds around the winding wheel; the leash cord is released out of the casing through the cord outlet hole; the pet leash device also comprises a locking mechanism; the locking mechanism comprises a button, a manipulation member, a first spring and a pawl member; the manipulation member comprises a transverse portion and a longitudinal portion connected sequentially; a bottom part of the button is hinged with the transverse portion; the longitudinal portion and one end of the pawl member are hinged together; the first spring is positioned between the transverse portion and a wheel locking portion of the pawl member; the winding wheel is provided with troughs between gear teeth of the winding wheel; each trough is capable to be fitted in with the pawl member when the button is pressed down; a rotary spring for rotating the winding wheel so as to retract the leash cord is provided inside the winding wheel.

2. The pet leash device of claim 1, wherein a platform is provided in a middle lower portion of the button; a protruded portion corresponding to the platform for locking purpose is provided in the casing.

3. The pet leash device of claim 2, wherein an installation hole for installing the button is provided on the casing; the installation hole has a diameter larger than a diameter of the button.

4. The pet leash device of claim 1, wherein the longitudinal portion is sleeved with a second spring; the second spring is positioned between the pawl member and the transverse portion.

5. The pet leash device of claim 1, wherein the locking mechanism also comprises a manipulation rod; the first spring sleeves the manipulation rod; one end of the manipulation rod is connected with the transverse portion; another end of the manipulation rod is connected with the pawl member.

6. The pet leash device of claim 1, wherein the winding wheel sleeves on a central axis provided inside the casing.

7. The pet leash device of claim 1, wherein one side of the casing comprises an integrally formed handle.

8. The pet leash device of claim 8, wherein the handle is ergonomically provided with a curved portion that fits a shape of a hand.

9. The pet leash device of claim 1, wherein a hinging hole that provides hinging of the longitudinal portion and the pawl member is an elliptical hole.

10. The pet leash device of claim 3, wherein the casing is also provided with a soft plastic member; the soft plastic member covers an inner side wall of the installation hole.
